# EUROPÄISCHE PATENTSCHRIFT

(11) **EP 2 858 770 B1**
(45) Veröffentlichungstag und Bekanntmachung des Hinweises auf die Patenterteilung: **12.10.2016**
(21) Anmeldenummer: 13735188.8
(22) Anmeldetag: 06.06.2013
(51) Int. Cl.: B22C 1/18, B22C 9/02, B22C 9/12, C04B 35/14

(54) **FORMSTOFFMISCHUNGEN ENTHALTEND BARIUMSULFAT SOWIE VERFAHREN ZUR HERSTELLUNG VON GIESSFORMEN / KERNEN, VERFAHREN ZUM ALUMINIUMGUSS UND FORM ODER KERN SOMIT HERSTELLBAR**
MOLDING MATERIAL MIXTURES CONTAINING BARIUM SULFATE
MÉLANGES DE MATIÈRES CONTENANT DU SULFATE DE BARIUM, POUR LA FABRICATION DE MOULES

(30) Priorität: 06.06.2012 DE 102012104934
(43) Veröffentlichungstag der Anmeldung: 15.04.2015
(73) Patentinhaber: ASK Chemicals GmbH, 40721 Hilden (DE)
(72) Erfinder: DETERS, Heinz, 40239 Düsseldorf (DE); KÖRSCHGEN, Jörg, 42799 Leichlingen (DE); OBERLEITER, Martin, 40229 Düsseldorf (DE)
(74) Vertreter: Müller Schupfner & Partner Patent- und Rechtsanwaltspartnerschaft mbB
(86) Internationale Anmeldenummer: PCT/DE2013/000309
(87) Internationale Veröffentlichungsnummer: WO 2013/182186

(56) Entgegenhaltungen:
- DE-A1-102007 045 649
- GB-A- 1 261 206
- RUDOLPH S ET AL: "EINSATZ VON BORNITRID-SCHLICHTEN IM PRAKTISCHEN BETRIEB DER DRUCK- UND KOKILLENGIESSEREIEN", GIESSEREI, GIESSEREI VERLAG, DUSSELDORF, DE, Bd. 80, Nr. 8, 19. April 1993 (1993-04-19) , Seiten 256-259, XP000364124, ISSN: 0016-9765
- SCHNEIDER H ET AL: "Einige chemische und strukturelle Untersuchungen zum Wasserglas-CO2-Verfahren. I: Schrifttumsuebersicht und Ergebnisse chemischer Untersuchungen", GIESSEREIFORSCHUNG, GIESSEREI VERLAG, DUSSELDORF, DE, Bd. 43, Nr. 1, Januar 1991 (1991-01), Seiten 1-9, XP009170740, ISSN: 0046-5933
- SCHNEIDER H ET AL: "Einige chemische und strukturelle Untersuchungen zum Wasserglas-CO2-Verfahren. II: Schrifttumsuebersicht und Ergebnisse struktureller Untersuchungen", GIESSEREIFORSCHUNG, GIESSEREI VERLAG, DUSSELDORF, DE, Bd. 43, Nr. 2, Januar 1991 (1991-01), Seiten 63-73, XP009170741, ISSN: 0046-5933
- ZHU CHUN-XI: "Recent advances in waterglass sand technologies", CHINA FOUNDRY, FOUNDRY JOURNAL AGENCY, CN, Bd. 4, Nr. 1, Februar 2007 (2007-02), Seiten 13-17, XP002699800, ISSN: 1672-6421

## Beschreibung

Die Erfindung betrifft Formstoffmischungen enthaltend Bariumsulfat in Kombination mit feuerfesten Formgrundstoffen, einem wasserglasbasierten Bindemittelsystem zur Herstellung von Gießformen und Kernen für die Gießereiindustrie mit dem Ziel, Gussstücke, insbesondere aus Aluminium, zu erhalten, die eine verbesserte Gussoberfläche aufweisen. Die Verbesserung macht sich insbesondere durch weniger Sandanhaftungen, Sandeinbrände und Penetrationen/Rauigkeiten bemerkbar.

### Stand der Technik

Gießformen setzen sich im Wesentlichen aus Kernen und Formen zusammen, welche die Negativformen des herzustellenden Gussstücks darstellen. Diese Kerne und Formen bestehen dabei aus einem feuerfesten Material, beispielsweise Quarzsand, und einem geeigneten Bindemittel, das der Gießform nach der Entnahme aus dem Formwerkzeug eine ausreichende mechanische Festigkeit verleiht. Für die Herstellung von Gießformen verwendet man also einen feuerfesten Formgrundstoff, welcher mit einem geeigneten Bindemittel umhüllt ist. Der feuerfeste Formgrundstoff liegt bevorzugt in einer rieselfähigen Form vor, so dass er in eine geeignete Hohlform eingefüllt und dort verdichtet werden kann. Durch das Bindemittel wird ein fester Zusammenhalt zwischen den Partikeln des Formgrundstoffs erzeugt, so dass die Gießform die erforderliche mechanische Stabilität erhält.

Gießformen müssen verschiedene Anforderungen erfüllen. Beim Gießvorgang selbst müssen sie zunächst eine ausreichende Festigkeit und Temperaturbeständigkeit aufweisen, um das flüssige Metall in den aus einem oder mehreren Gieß(teil)formen gebildeten Hohlraum aufnehmen zu können. Nach Beginn des Erstarrungsvorgangs wird die mechanische Stabilität des Gussstücks durch eine erstarrte Metallschicht gewährleistet, die sich entlang der Wände der Gießform ausbildet. Das Material der Gießform muss sich nun unter dem Einfluss der vom Metall abgegebenen Hitze in der Weise zersetzen, dass es seine mechanische Festigkeit verliert, also der Zusammenhalt zwischen einzelnen Partikeln des feuerfesten Materials aufgehoben wird. Im Idealfall zerfällt die Gießform wieder zu einem feinen Sand, der sich mühelos vom Gussstück entfernen lässt.

In neuerer Zeit wird darüber hinaus immer häufiger gefordert, dass während der Herstellung der Gießformen sowie während der Herstellung des Gießens und Abkühlens möglichst keine Emissionen in Form von CO₂ oder Kohlenwasserstoffen entstehen, um die Umwelt zu schonen und die Geruchsbelästigung der Umgebung durch Kohlenwasserstoffe (hauptsächlich aromatisch) einzuschränken. Um diesen neueren Anforderungen zu genügen, wurden in den vergangenen Jahren anorganische Bindesysteme entwickelt bzw. weiterentwickelt, deren Verwendung dazu führt, dass Emissionen von CO₂ und Kohlenwasserstoffen bei der Herstellung von Metallformen vermieden oder zumindest deutlich minimiert werden können. Allerdings ist die Verwendung von anorganischen Bindesystemen häufig mit anderen Nachteilen verbunden, die im Einzelnen in den nachfolgenden Ausführungen beschrieben werden.

Anorganische Bindemittel haben im Vergleich zu organischen Bindemitteln den Nachteil, dass die daraus hergestellten Gießformen relativ geringe Festigkeiten aufweisen. Dies tritt besonders deutlich unmittelbar nach der Entnahme der Gießform aus dem Werkzeug zutage. Gute Festigkeiten zu diesem Zeitpunkt sind aber besonders wichtig für die Produktion komplizierter und/oder dünnwandiger Formteile und deren sichere Handhabung Auch die Beständigkeit gegen Luftfeuchte ist gegenüber organischen Bindemitteln deutlich reduziert. EP 1 802 409 B1 offenbart, dass sich höhere Sofortfestigkeiten und höhere Beständigkeit gegen Luftfeuchte durch die Verwendung eines feuerfesten Formgrundstoffs, eines auf Wasserglas basierten Bindemittels sowie Zusätzen von synthetischem amorphem Siliziumdioxid realisieren lassen. Durch diesen Zusatz lässt sich eine sichere Handhabung auch komplizierter Gießformen gewährleisten.

Das in EP 1802409 B1 beschriebene anorganische Bindemittelsystem kann im Vergleich mit organischen Bindemitteln zu starken Sandanhaftungen am Gussstück führen, was mit einem erheblichen Reinigungsaufwand und somit Mehrkosten für die Gießereien verbunden ist. WO 2008/046651 offenbart in diesem Zusammenhang, dass sich diese Sandanhaftungen am Gussstück deutlich minimieren lassen, wenn der Formstoffmischung, bestehend aus einem feuerfesten Formgrundstoff, einem auf Wasserglas basierten Bindemittel sowie einem Zusatz eines teilchenförmigen Metalloxids, welches ausgewählt ist aus der Gruppe von Siliciumdioxid, Aluminiumoxid, Titanoxid und Zinkoxid, ein Kohlenhydrat zugesetzt ist.

Durch den Zusatz eines Kohlenhydrats kann also die Oberflächengüte des Gussstücks verbessert werden. Der Zusatz von Kohlenhydraten zur Formstoffmischung führt während des Metallgießens allerdings wieder zu Emissionen von CO₂ und Kohlenwasserstoffen - wenn auch in deutlich reduzierter Form im Vergleich zu rein organischen Bindemittelsystemen.

Es ist in der Gießereiindustrie im Allgemeinen bekannt, dass der Einsatz von bestimmten feuerfesten Materialien als Beschichtung von Gießformen die Oberflächengüte des betreffenden Gussstücks erheblich verbessem kann. Diese feuerfesten Materialien können beispielsweise in Form von wässrigen oder alkoholischen Suspensionen, sogenannten Schlichten, mithilfe unterschiedlicher Methoden auf die Gießform aufgetragen werden. Anschließend erfolgt ein Trocknungsprozess, um das flüssige Medium zu entfernen. Alternativ können diese feuerfesten Materialien auch in trockener Form aufgetragen werden. Die eingesetzten feuerfesten Materialien zeichnen sich durch eine geringe Wechselwirkung sowie durch eine gute Nichtbenetzung mit der Metallschmelze aus. Ferner liegen diese Materialien sehr feinteilig vor, um die Berg-und-Tal-Struktur der Oberfläche des Formgrundstoffs (z.B. Quarzsand) zu minimieren und so zu verhindern, dass die Metallschmelze in diese Täler begünstigt durch gute Benetzungseigenschaften des Formgrundstoffs (z.B. SiO₂) eindringt, was wiederum zu einer schlechten Oberflächengüte des betreffenden Gussstücks führen würde.

Häufig werden Materialien eingesetzt, die eine Schichtstruktur aufweisen, wie beispielsweise Talk, hexagonales Bomitrid (vgl. "Einsatz von Bomitrid-Schlichten im praktischen Betrieb der Druck- und Kokillengießerei", Giesserei 80 Nr. 8, 1993, Seite 256-259) oder Graphit. Es wird dann davon ausgegangen, dass die Schichten sich parallel zu der Oberfläche der Gießform ausrichten und sich so eine glatte Oberfläche realisieren lässt. Andere feinteilige, anorganische Materialien können ebenfalls als Beschichtungsmaterial eingesetzt werden, sofern diese nicht mit der Schmelze wechselwirken bzw. reagieren und/oder bevorzugt eine gute Nichtbenetzung mit der Metallschmelze (insbesondere Aluminiumschmelze) aufweisen.

Solche Materialien sind beispielsweise Korund (Al₂O₃) oder Zirkonsilikat (ZrSiO₄). Der Einsatz von Beschichtungen ist allerdings auch mit erheblichen Nachteilen verbunden. Der Arbeits- und Materialaufwand ist für die Gießereien deutlich höher, was natürlich zu höheren Kosten führt.

Auch ist anzumerken, dass der Einsatz von wässrigen Schlichten die Stabilität der mit anorganischen Bindesystemen gebundenen Gießformen beeinträchtigen kann. Aus diesen Gründen ist man im Allgemeinen bemüht, den Einsatz von sog. Schlichten zu minimieren.

Die wenig benetzende Wirkung von BaSO₄ gegenüber Nichteisen-Metallschmelzen (NE-Metallschmelzen), insbesondere Schmelzen von Aluminium und/oder Aluminiumlegierungen, ist in der Literatur prinzipiell bekannt (vgl. US 6008152, "The effects of fumed silica and barite on the aluminum resistance of alumina castables" (Journal of the Minerals, Metals and Materials Society (JOM), Volume 55, Number 11, Jahr 2003, Seite 66-69) und "Feuerfeste Zustellung für Aluminium" (Giesserei-Erfahrungsaustausch 9+10, Jahr 2011, Seite 33-35)). Ein weiteres wenig benetzendes Additiv ist CaF₂. Jedoch werden die wenig benetzenden Additive in diesen Fällen als Additiv zur Herstellung von Rinnen und Röhren sowie von Auskleidungen von Aluminiumschmelzöfen eingesetzt, um die Korrosionsbeständigkeit des entsprechenden Feuerfestmaterials zu erhöhen. Durch den Zusatz von Bariumsulfat als wenig benetzendes Additive zum Feuerfestmaterial, welches Silica und/oder Silica Staub enthalten kann, wird also die chemische Beständigkeit des Feuerfestmaterials gegenüber Aluminiumschmelzen verbessert, um so eine möglichst langanhaltende Verwendbarkeit der damit hergestellten Formen zu ermöglichen. Obigen Referenzen ist jeweils gemeinsam, dass kein Wasserglas eingesetzt wurde.

Rinnen und Röhren bzw. Auskleidungen von Aluminiumschmelzöfen zeichnen sich durch eine langanhaltende Verwendbarkeit aus, während die Kerne oder Gießformen nach einmaliger Verwendung möglichst rückstandsfrei zerfallen sollen. Des Weiteren weisen die üblicherweise verwendeten Gießformen eine viel höhere Porosität aus als gesinterte Feuerfestmaterialien, die als Rinnen und Röhren in Aluminiumschmelzöfen zum Transport von Aluminiumschmelzen Anwendung finden. Somit ergibt sich für Gießformen ein ganz unterschiedliches Anforderungsprofil als für Auskleidungen von Aluminiumschmelzöfen.

### Probleme des Standes der Technik und Aufgabenstellung

Die bisher bekannten anorganischen Bindemittelsysteme für Gießereizwecke weisen noch Raum für Verbesserungen auf. Vor allem ist es wünschenswert, ein vollständig anorganisches Bindemittelsystem zu entwickeln, welches (a) keine Emissionen von CO₂ und organischen Pyrolyseprodukten während des Metallgießens entstehen lässt, (b) ein entsprechendes Festigkeitsniveau erreicht, welches im automatisierten Fertigungsprozess nötig ist (insbesondere Heißfestigkeiten und Festigkeiten nach Lagerung), und (c) eine Gussoberfläche des Gussteils ermöglicht, welche deutlich weniger Sandanhaftungen, Sandeinbrände, Penetrationen sowie Verfärbungen aufweist und so den Reinigungsaufwand für die Gussteile minimiert, ohne Beschichtungen bzw. Schlichte einzusetzen. Die Nachbearbeitung von Gussstücken erfordert einen hohen Aufwand an Zeit, Arbeitskraft und Material, und stellt daher einen wesentlichen Kostenfaktor bei der Herstellung dar. Bereits unmittelbar nach der Entnahme aus der Gießform sollte daher das Gussstück bereits eine hohe Oberflächengüte aufweisen.

Der Erfindung lag daher die Aufgabe zugrunde, eine Formstoffmischung zur Herstellung von Gießformen für die Metallverarbeitung zur Verfügung zu stellen, welches mindestens einen feuerfesten Formgrundstoff sowie ein auf Wasserglas basierendes Bindemittelsystem umfasst, welche die Herstellung von Gießformen mit komplexer Geometrie ermöglicht und die beispielsweise auch dünnwandige Abschnitte umfassen können, wobei nach dem Metallguss das erhaltene Gussstück bereits eine hohe Oberflächenqualität aufweisen sollte, wie sie sich z.B. durch geringe Sandanhaftungen, Sandeinbrände, Penetrationen sowie Verfärbungen bemerkbar macht.

Diese Aufgabe wird mit einer Formstoffmischung mit den Merkmalen der unabhängigen Patentansprüche gelöst. Vorteilhafte Weiterbildungen der erfindungsgemäßen Formstoffmischung sind Gegenstand der abhängigen Patentansprüche oder nachfolgend beschrieben.

### Zusammenfassung der Erfindung

Überraschend wurde gefunden, dass durch den Zusatz von Bariumsulfat zur Formstoffmischung Gießformen auf der Basis anorganischer Bindemittel hergestellt werden können, die eine hohe Festigkeit sowohl unmittelbar nach der Herstellung als auch bei längerer Lagerung aufweisen. Ferner wird nach dem Metallguss ein Gussstück mit sehr hoher Oberflächenqualität erhalten, sodass nach der Entfernung der Gießform nur eine geringe oder sogar gar keine Nachbearbeitung der Oberfläche des Gussstücks erforderlich ist. Dieser Vorteil ist mit deutlichen geringeren Kosten für die Herstellung des Gussstücks verbunden.

Nach elner Ausführungsform der Erfindung enthält die Formstoffmischung im Wesentlichen keine organischen Zusätze, d.h. bis zu maximal 0,2 Gew.%, oder sogar keine organischen Zusätze, so dass wenn Oberhaupt eine sehr geringe oder keine Rauchentwicklung beobachtet werden, sodass die Belastung am Arbeitsplatz für die dort beschäftigen Mitarbeiter sowie der in der Umgebung lebenden Menschen durch gesundheitsschädliche Emissionen verhindert werden. Auch stellt die Verwendung der erfindungsgemäßen Formstoffmischung einen Beitrag zur Reduzierung von klimaschädlichen Emissionen (durch CO₂ und andere, organische Pyrolyseprodukte) dar.

Die erfindungsgemäße Formstoffmischung zur Herstellung von Gießformen für die Metalivererbeltung umfasst mindestens:
- einen feuerfesten Formgrundstoff; sowie
- ein auf Wasserglas basierendes Bindemittel und
- Bariumsulfat und
- teilchenförmiges Metalloxid ausgewählt aus der Gruppe von amorphem SlO₂, Aluminiumoxiden und Alumoslllkaten und deren Mischungen.

### Detaillierte Beschreibung der Erfindung

Als feuerfester Formgrundstoff können für die Herstellung von Gießformen übliche Materialien verwendet werden. Geeignet sind beispielsweise Quarz-, Zirkon- oder Chromerzsand, Olivin, Vermicullt, Bauxit und Schamotte, insbesondere mehr als 50 Gew.% Quarzsand bezogen auf den feuerfesten Formgrundstoff. Dabei ist es nicht notwendig, ausschließlich Neusande einzusetzen. Im Sinne einer Ressourcenschonung und zur Vermeidung von Deponiekosten ist es sogar vorteilhaft, einen möglichst hohen Anteil an regeneriertem Altsand zu verwenden.

Der feuerfeste Formgrundstoff macht vorzugsweise größer 80 Gew.%, insbesondere größer 90 Gew.% der Formstoffmischung aus.

Ein geeigneter Sand wird z.B. in der WO 2008/101668 (= US 2010/173767 A1) beschrieben. Gleichfalls geeignet sind Regenerate, die durch Waschen und anschließende Trocknung erhalten werden. Einsetzbar, aber weniger bevorzugt sind durch rein mechanische Behandlung gewonnene Regenerate. In der Regel können die Regenerate mindestens ca. 70 Gew.% des Neusands ersetzen, bevorzugt mindestens ca. 80 Gew.% und besonders bevorzugt mindestens ca. 90 Gew.%.

Weiter können als feuerfeste Formgrundstoffe auch künstliche Formstoffe verwendet werden wie z.B. Glasperlen, Glasgranulat, die unter der Bezeichnung "Cerabeads" bzw. "Carboaccucast" bekannten kugelförmigen keramischen Formgrundstoffe oder Aluminiumsilikatmikrohohlkugeln (sog. Microspheres). Solche Aluminiumsilikatmikrohohlkugeln werden beispielsweise von der Omega Minerals Germany GmbH, Norderstedt, in verschiedenen Qualitäten mit unterschiedlichen Gehalten an Aluminiumoxid unter der Bezeichnung "Omega-Spheres" in den Handel gebracht. Entsprechende Produkte sind bei der PQ Corporation (USA) unter der Bezeichnung "Extendospheres" erhältlich.

Der mittlere Durchmesser der feuerfesten Formgrundstoffe liegt in der Regel zwischen 100 µm und 600 µm, bevorzugt zwischen 120 µm und 550 µm und besonders bevorzugt zwischen 150 µm und 500 µm. Die Partikelgröße lässt sich z.B. durch Siebung nach DIN ISO 3310 bestimmen. Besonders bevorzugt sind Teilchenformen mit größter Längenausdehnung zu kleinster Längenausdehnung (rechtwinkelig zueinander und jeweils für alle Raumrichtungen) von 1:1 bis 1 : 5 oder 1:1 bis 1 : 3, d.h. solche die z.B. nicht faserförmig sind.

In Gießversuchen, insbesondere mit Aluminium, wurde gefunden, dass künstliche Formgrundstoffe, vor allem Glasperlen, Glasgranulat bzw. Microspheren, zur Erzeugung glätterer Gussoberflächen beitragen können. Es ist dabei nicht notwendig, den gesamten Formgrundstoff aus den künstlichen Formgrundstoffen zu bilden.

Der bevorzugte Anteil der künstlichen Formgrundstoffe liegt bei mindestens etwa 3 Gew.%, besonders bevorzugt mindestens 5 Gew.%, insbesondere bevorzugt mindestens 10 Gew.%, vorzugsweise bei mindestens etwa 15 Gew.-%, besonders bevorzugt bei mindestens etwa 20 Gew.%, bezogen auf die gesamte Menge des feuerfesten Formgrundstoffes. Der feuerfeste Formgrundstoff weist vorzugsweise einen rieselfähigen Zustand auf, insbesondere um die erfindungsgemäße Formstoffmischung in üblichen Kernschießmaschinen verarbeiten zu können.

Die Wassergläser enthalten gelöste Alkalisilikate und können durch Lösen von glasartigen Lithium-, Natrium- und Kaliumsilikaten in Wasser hergestellt werden. Das Wasserglas weist vorzugsweise ein molares Modul SiO₂/M₂O im Bereich von 1,6 bis 4,0, insbesondere 2,0 bis kleiner 3,5, auf, wobei M für Lithium, Natrium oder Kalium steht.

Die Bindemittel können auch auf Wassergläsern basieren, die mehr als eins der genannten Alkaliionen enthalten, wie z.B. die aus DE 2652421 A1 (= GB1532847 A) bekannten lithiummodifizierten Wassergläser. Die Menge an M₂O ergibt sich aus der Summe aller Alkaliionen im Wasserglas. Weiterhin können die Wassergläser auch mehrwertige Ionen enthalten wie z.B. die in EP 2305603 A1 (= WO 2011/042132 A1) beschriebenen Al-modifizierten Wassergläser.

Die Wassergläser weisen einen Feststoffanteil im Bereich von 25 bis 65 Gew.% auf, vorzugsweise von 30 bis 60 Gew.%. Der Feststoffanteil ist der Anteil der Si-und M-Verbindungen im Wasserglas, berechnet als SiO₂ und M₂O. Je nach Anwendung und gewünschtem Festigkeitsniveau werden zwischen 0,5 Gew.% und 5 Gew.% des auf Wasserglas basierenden Bindemittels eingesetzt, vorzugsweise zwischen 0,75 Gew.% und 4 Gew.%, besonders bevorzugt zwischen 1 Gew.% und 3,5 Gew.%, jeweils bezogen auf den Formgrundstoff. Die Angaben beziehen sich auf die Gesamtmenge des Wasserglasbinders, einschließlich des (insbesondere wässrigen) Lösungs- bzw. Verdünnungsmittels und des (etwaigen) Feststoffanteils(=100%).

Die erfindungsgemäße. Formstoffmischung enthält Bariumsulfat. Das Bariumsulfat kann synthetisch hergestelltes als auch natürliches Bariumsulfat sein, d.h. in Form von Mineralien hinzugefügt sein, die Bariumsulfat enthalten, wie Schwerspat bzw. Baryt. Synthetisch hergestelltes Bariumsulfat (auch Blanc Fixe genannt) wird beispielsweise mithilfe einer Fällungsreaktion hergestellt. Zu diesem Zweck werden meist leicht lösliche Bariumverbindungen (Bariumsalze) in Wasser gelöst. Anschließend wird durch Zugabe von leicht löslichen Sulfat-Salzen (wie z.B. Natriumsulfat) oder auch Schwefelsäure das schwerlösliche Bariumsulfat gefällt. Das gefällte Bariumsulfat wird abfiltriert, getrocknet und evtl. gemahlen.

Natürliches Bariumsulfat wird als Roherz gewonnen und anschließend durch verschiedene Methoden aufgearbeitet (z.B. Dichtesortierung, Vermahlung usw.). Bevorzugt hat das Bariumsulfat eine Reinheit von mehr als 85 Gew.%, besonders bevorzugt von mehr als 90 Gew.%. Das natürlich gewonnene Bariumsulfat kann beispielsweise Verunreinigungen von Siliziumdioxid und Calciumfluorid enthalten. Weitere Versuche haben gezeigt, dass Verunreinigungen mit Metallfluoriden, insbesondere Calciumfluorid, zu Verfärbungen der Gussoberfläche und zu Porositäten führen können. Der Gehalt an fluoridhaftigen Verunreinigungen, insbesondere Calciumflurid (CaF₂) sowie auch anderer Metallfluoride, sollte demnach möglichst klein sein, um die Gussqualität und -oberfläche nicht zu beeinträchtigen. Vorteilhaft ist der Gesamtgehalt an Metallfluoriden (einschließlich CaF₂) kleiner als 6 Gew.%, bevorzugt kleiner als 3 Gew.%, besonders bevorzugt kleiner als 1 Gew.%, jeweils bezogen auf die gesamte Menge des eingesetzten, natürlich gewonnenen Bariumsulfats. Ganz besonders bevorzugt enthält das erfindungsgemäße Bariumsulfat keine Verunreinigungen von Metalltluoriden (einschließlich Calciumfluorid).

Vorzugsweise ist die beanspruchte Formstoffzusammensetzung frei von Metallfluorid, wobei dies bedeutet, dass die Formstoffmischung kleiner 0,1 Gew.%, vorzugsweise kleiner 0,05 Gew.%, insbesondere bevorzugt kleiner 0,01 Gew.% Metallfluorid enthält.

Die durchschnittliche Teilchengröße des erfindungsgemäß einzusetzenden Bariumsulfats liegt vorzugsweise zwischen 0,1 µm und 90 µm. Die Partikelgrößenverteilung lässt sich beispielsweise mit Hilfe von dynamischer Lichtstreuung (z.B. Horiba LA 950) bestimmen. Bevorzugt beträgt der Siebrückstand auf einem Sieb mit der Maschenweite von 45 µm weniger als 20 Gew.%, besonders bevorzugt weniger als 10 Gew.%, insbesondere bevorzugt weniger als 5 Gew.%.

Das Bariumsulfat wird bevorzugt in einer Menge von 0,02 bis 5,0 Gew.%, besonders bevorzugt 0,05 bis 3,0 Gew.%, insbesondere bevorzugt 0,1 bis 2,0 Gew.% oder 0,3 bis 0,99 Gew.%, jeweils bezogen die gesamte Formstoffmischung, zugegeben. Überraschenderweise - auch im Hinblick auf die hohe Dichte des Bariumsulfats und des damit verbundenen geringen Volumens pro Masse - bewirken selbst geringe Mengenzusätze - also geringe Volumina - zur Formstoffmischung eine deutliche Steigerung der Oberflächengüte des betreffenden Gussstücks. Der positive Einfluss von BaSO₄ auf die Qualität der Gussoberfläche ist für den Fachmann überraschend; da das BaSO₄ auch in großer Verdünnung durch den Feuerfeststoff wirksam ist, was für andere bekannte Materialien, die von NE-Metallschmelzen nicht benetzt werden, nicht gilt. Als Beispiel sei Grafit genannt: Wegen seiner geringen Benetzbarkeit durch geschmolzenes Aluminium eignet sich dieses Material hervorragend zur Herstellung von Entgasungsrohren für NE-Metallschmelzen (Produktbeschreibung der SGLCarbon GmbH, Drachenburgstr. 1, 53170 Bonn/Deutschland).

Auch als Rohstoff für Schlichteüberzüge von Kernen und Formen bewirkt Grafit bereits in sehr dünner Schichtstärke glattere Gussoberflächen. Als Sandadditiv ist es jedoch im Gegensatz zu BaSO₄ nicht wirksam. Größere, möglicherweise wirksame Mengen an Grafit zuzusetzen, ist nicht angebracht, da sonst die Festigkeiten der Formen und Kerne so stark absinken, dass diese nicht mehr für den Abguss eingesetzt werden können.

Auch andere für ihre geringe Benetzbarkeit durch geschmolzenes Aluminium bekannte Materialien wie Al₂O₃, ZrSiO₄ oder Talkum zeigen als Additiv keine positive Wirkung auf die Gussoberfläche. Ein weiterhin bekanntes Additiv mit geringer Benetzbarkeit ist hexagonales Bornitrid. Es wurde beobachtet, dass der Zusatz von hexagonalem Bomitrid zwar zu verbesserten Oberflächen, allerdings auch zu deutlich reduzierten Festigkeiten führt - daher ist der Einsatz von Bomitrid nicht bevorzugt. CaF₂ ist ein weiteres Additiv mit geringer Benetzbarkeit mit NE-Metallschmelzen, insbesondere Aluminiumschmelzen. Bei Verwendung von Fluoriden als Additiv zur Formstoffmischung, insbesondere CaF₂, zeigen sich zwar verhältnismäßig sandanhaftungsfreie und glatte Oberflächen des entsprechenden Gussstücks, allerdings ergeben sich durch diese Verwendung, insbesondere bei Calciumfluorid, Verfärbungen der Gussoberfläche, insbesondere wenn das Gussstück aus Aluminium und/oder Aluminiumlegierungen besteht. Diese Verfärbungen sind jedoch unerwünscht und lassen eine Reaktion des Metalls mit dem fluoridhaltigen Material vermuten - daher ist auch der Einsatz von CaF₂ nicht bevorzugt.

Zusammenfassend konnte folglich beobachtet werden, dass nur der Zusatz von Bariumsulfat zur Formstoffmischung sowohl eine wesentliche Verbesserung der Oberflächengüte des Gussstücks (z.B. hinsichtlich geringerer Sandanhaftungen, Sandeinbrände, Penetrationen und auch Verfärbungen) bewirkt als auch das für die automatisierte Serienfertigung nötige Festigkeitsniveau gewährleistet, insbesondere eine geeignete Heißfestigkeit. Diese Effekte waren für den Fachmann sehr überraschend. Der vollständige Wirkmechanismus des Bariumsulfats ist nicht geklärt.

Gemäß einer weiteren Ausführungsform können der erfindungsgemäßen Formstoffmischung auch andere Stoffe zugesetzt werden, die sich durch eine geringe Benetzung mit geschmolzenem Aluminium auszeichnen, wie z.B. Bornitrid.

Eine solche Mischung von wenig benetzenden Stoffen, die u. a. Bariumsulfat als wenig benetzendes Mittel enthält, kann ebenfalls zu einer glatten, sandanhaftungsfreien Gussoberfläche führen. Bezogen auf die Gesamtmenge nicht/wenig benetzender Stoffe sollte der Anteil des Bariumsulfats größer als 5 Gew%, bevorzugt größer als 10 Gew%. Insbesondere bevorzugt größer als 20 Gew% oder größer 60 Gew.% sein. Die Obergrenze stellt reines Bariumsulfat dar - der Anteil des Banumsuifats an nichtbenetzenden Mittaln ist in diesem Fall 100 Gew%. Die Mischung nicht/wenig benetzender Stoffe wird bevorzugt in einer Menge von 0,02 bis 5,0 Gew.%, besonders bevorzugt 0,05 bis 3,0 Gew.%, Insbesondere bevorzugt 0,1 bis 2,0 Gew.% oder 0,3 bis 0,99 Gew.%, jewells bezogen auf die Formstoffmischung, zugegeben.

Der erfindungsgemäßen Formstoffmischung wird ein Anteil eines teilchenförmigen Metalloxids zugesetzt, um das Festigkeitsniveau der mit solchen Formstoffmischungen hergestellten Gießformen zu erhöhen. Eine Steigerung der Festigkeiten der Gießformen, insbesondere die Stelgerung der Heißfestigkeiten, kann im automatisierten Fertigungsprozess vorteilhaft sein. Das teilchenförmige Metalloxid wird ausgewählt aus der Gruppe von amorphem Siliciumdioxid, Aluminiumoxiden, Alumosilikaten und deren Mischungen. Die Teilchengrösse dieser Metalloxide beträgt vorzugsweise weniger als 300 µm, bevorzugt weniger als 200 µm, insbesondere bevorzugt weniger als 100 µm und weist z.B. eine mittlere Primärpartikelgröße zwischen 0,05 µm und 10 µm auf.

Die Teilchengröße lässt sich durch Siebanalyse bestimmen. Besonders bevorzugt beträgt der Siebrüokstand auf einem Sieb mit einer Maschenweite von 63 µm weniger als 10 Gew.-%, vorzugsweise weniger als 8 Gew.%. Besonders bevorzugt wird als teilchenförmiges Metalloxid Siliciumdioxid verwendet, wobei hier synthetisch hergestelltes amorphes Siliciumdioxid besonders bevorzugt ist.

Das nach der vorliegenden Erfindung eingesetzte amorphe SiO₂ hat einen Wassergehalt von kleiner 15 Gew.%, insbesondere kleiner 5 Gew.% und besonders bevorzugt von kleiner 1 Gew.%. Insbesondere wird das amorphe SiO₂ als Pulver eingesetzt.

Als amorphes SiO₂ können sowohl synthetisch hergestellte als auch natürlich vorkommende Kieselsäuren eingesetzt werden. Letztere, bekannt z.B. aus DE 102007045649, sind aber nicht bevorzugt, da sie i.d.R. nicht unerhebliche kristalline Anteile enthalten und deshalb als karzinogen eingestuft sind.

Unter *synthetisch* wird nicht natürlich vorkommendes amorphes SiO₂ verstanden, d. h. dessen Herstellung eine chemische Reaktion umfasst, z.B. die Herstellung von Kieselsolen durch Ionenaustauschprozesse aus Alkalisilikatlösungen, die Ausfällung aus Alkalisilikatlösungen, die Flammhydrolyse von Siliciumtetrachlorid oder die Reduktion von Quarzsand mit Koks im Lichtbogenofen bei der Herstellung von Ferrosilicium und Silicium. Das nach den beiden letztgenannten Verfahren hergestellte amorphe SiO₂ wird auch als pyrogenes SiO₂ bezeichnet.

Gelegentlich wird unter synthetischem amorphem SiO₂ nur Fällungskieselsäure (CAS-Nr. 112926-00-8) und flammhydrolytisch hergestelltes SiO₂ (Pyrogenic Silica, Fumed Silica, CAS-Nr. 112945-52-5) verstanden, während das bei der Ferrosilicium- bzw. Siliciumherstellung entstandene Produkt lediglich als amorphes SiO₂ (Silica Fume, Microsilica, CAS-Nr. 69012-64-12) bezeichnet wird. Für die Zwecke der vorliegenden Erfindung wird auch das bei der Ferrosilicium- bzw. Siliciumherstellung entstandene Produkt als synthetisches amorphes SiO₂ verstanden.

Bevorzugt eingesetzt werden Fällungskieselsäuren und pyrogenes, d.h. flammhydrolytisch oder im Lichtbogen hergestelltes SiO₂. Die durchschnittliche Primärpartikelgröße des synthetischen amorphen Siliziumdioxids kann zwischen 0,05 µm und 10 µm, insbesondere zwischen 0,1 µm und 5 µm, besonders bevorzugt zwischen 0,1 µm und 2 µm betragen. Die Primärpartikelgröße kann z.B. mit Hilfe von dynamischer Lichtstreuung (z.B. Horiba LA 950) bestimmt sowie durch Rasterelektronenmikroskop-Aufnahmen (REM-Aufnahmen mit z.B. Nova NanoSEM 230 der Firma FEI) überprüft werden. Des Weiteren konnten mit Hilfe der REM-Aufnahmen Details der Primärpartikelform bis in die Größenordnung von 0,01 µm sichtbar gemacht werden. Die SiO₂-Proben wurden für die REM-Messungen in destilliertem Wasser dispergiert und anschließend auf einem mit Kupferband beklebten Aluminiumhalter aufgebracht, bevor das Wasser verdampft wurde.

Des Weiteren wurde die spezifische Oberfläche des synthetisch amorphen Siliziumdioxids mithilfe von Gasadsorptionsmessungen (BET-Verfahren) nach DIN 66131 bestimmt. Die spezifische Oberfläche des synthetisch amorphen SiO₂ liegt zwischen 1 und 200 m²/g, insbesondere zwischen 1 und 50 m²/g, besonders bevorzugt zwischen 1 und 30 m²/g. Ggfs. können die Produkte auch gemischt werden, z.B. um gezielt Mischungen mit bestimmten Partikelgrößenverteilungen zu erhalten.

Durch Agglomeration bilden die genannten amorphen SiO₂-Typen leicht größere Aggregate. Für eine gleichmäßige Verteilung des amorphen SiO₂ in der Formstoffmischung ist es ggf. vorteilhaft, wenn die Aggregate beim Mischen teilweise wieder in kleinere Einheiten aufbrechen oder von vornherein eine bestimmte Größe nicht überschreiten. Vorzugsweise beträgt der Rückstand - um das Ausmaß der Agglomeration zu beschreiben - bei einem Durchgang durch ein Sieb mit 45 µm Maschenweite (325 mesh) nicht mehr als ca. 10 Gew.%, besonders bevorzugt nicht mehr als ca. 5 Gew.% und ganz besonders bevorzugt nicht mehr als ca. 2 Gew.%.

Je nach Herstellungsart und Produzent kann die Reinheit des amorphen SiO₂ stark variieren. Als geeignet haben sich Typen mit einem Gehalt von mindestens 85 Gew.% SiO₂ erwiesen, bevorzugt von mindestens 90 Gew.% und besonders bevorzugt von mindestens 95 Gew.%. Je nach Anwendung und gewünschtem Festigkeitsniveau werden zwischen 0,1 Gew.% und 2 Gew.% des teilchenförmigen amorphen SiO₂ eingesetzt, vorzugsweise zwischen 0,1 Gew.% und 1,8 Gew.%, besonders bevorzugt zwischen 0,1 Gew.% und 1,5 Gew.%, jeweils bezogen auf den Formgrundstoff.

Das Verhältnis von Wasserglasbinder zu teilchenförmigen Metalloxid und insbesondere amorphem SiO₂ kann innerhalb weiter Grenzen variiert werden. Dies bietet den Vorteil, die Anfangsfestigkeiten der Kerne, d.h. die Festigkeit unmittelbar nach der Entnahme aus dem Werkzeug, stark zu verbessern, ohne die Endfestigkeiten wesentlich zu beeinflussen. Dies ist vor allem im Leichtmetallguss von großem Interesse. Auf der einen Seite sind hohe Anfangsfestigkeiten erwünscht, um die Kerne nach ihrer Herstellung problemlos transportieren oder zu ganzen Kernpaketen zusammensetzen zu können, auf der anderen Seite sollten die Endfestigkeiten nicht zu hoch sein, um Schwierigkeiten beim Kernzerfall nach dem Abguss zu vermeiden, d.h. der Formgrundstoff sollte nach dem Gießen problemlos aus Hohlräumen der Gussform entfernt werden können.

Bezogen auf das Gewicht des Bindemittels (einschließlich Verdünnungs- bzw. Lösungsmittel) ist das amorphe SiO₂ vorzugsweise in einem Anteil von 2 bis 60 Gew.% enthalten, besonders bevorzugt von 3 bis 55 Gew.% und insbesondere bevorzugt zwischen 4 bis 50 Gew.%, bzw. besonders bevorzugt bezogen auf das Verhältnis Feststoffanteil des Wasserglases zu amorphem SiO₂ von 10 : 1 bis 1 : 1,2 (Gewichtsteile).

Die Zugabe des amorphen SiO₂ kann gemäß EP 1802409 B1 sowohl vor als auch nach der Binderzugabe direkt zum Feuerfeststoff erfolgen, es kann aber auch, wie in EP 1884300 A1 (= US 2008/029240 A1) beschrieben, zuerst eine Vormischung des SiO₂ mit zumindest einem Teil des Binders oder Natronlauge hergestellt und diese dann dem Feuerfeststoff zugemischt werden. Der ggf. noch vorhandene, nicht für die Vormischung verwendete Binder bzw. Binderanteil kann dem Feuerfeststoff vor oder nach der Zugabe der Vormischung oder zusammen mit dieser zugegeben werden. Vorzugsweise ist das amorphe SiO₂ dem Feuerfeststoff vor der Binderzugabe zugegeben.
Das synthetische amorphe Siliciumdioxid ist, bezogen auf das Gesamtgewicht des Bindemittels, vorzugsweise in einem Anteil von 1 bis 80 Gew.% enthalten, vorzugsweise zwischen 2 und 60 Gew.%, insbesondere bevorzugt zwischen 3 und 50 Gew.%.

In einer weiteren Ausführungsform kann die erfindungsgemäße Formstoffmischung eine phosphorhaltige Verbindung umfassen. Dieser Zusatz ist bei sehr dünnwandigen Abschnitten einer Gießform bevorzugt. Es handelt sich dabei bevorzugt um anorganische Phosphorverbindungen, in denen der Phosphor bevorzugt in der Oxidationsstufe +5 vorliegt. Durch den Zusatz phosphorhaltiger Verbindungen kann die Stabilität der Gießform weiter gesteigert werden. Dies ist insbesondere von Bedeutung, wenn beim Metallguss das flüssige Metall auf eine schräge Fläche trifft und dort wegen des hohen metallostatischen Drucks eine hohe Erosionswirkung ausübt bzw. zu Verformungen insbesondere dünnwandiger Abschnitte der Gießform führen kann.

Die phosphorhaltige Verbindung liegt bevorzugt in Form eines Phosphats oder Phosphoroxids vor. Das Phosphat kann dabei als Alkali- bzw. als Erdalkalimetallphosphat vorliegen, wobei Alkalimetallphosphate und hierbei insbesondere die Natriumsalze besonders bevorzugt sind.

Prinzipiell können auch Ammoniumphosphate oder Phosphate anderer Metallionen verwendet werden. Die als bevorzugt genannten Alkali- bzw. Erdalkalimetallphosphate sind allerdings leicht zugänglich und in an sich beliebigen Mengen kostengünstig verfügbar. Phosphate mehrwertiger Metallionen, insbesondere dreiwertiger Metallionen, sind nicht bevorzugt. Es wurde beobachtet, dass sich bei Verwendung derartiger Phosphate mehrwertiger Metallionen, insbesondere dreiwertiger Metallionen, die Verarbeitungszeit der Formstoffmischung verkürzt. Wird die phosphorhaltige Verbindung der Formstoffmischung in Form eines Phosphoroxids zugesetzt, liegt das Phosphoroxid bevorzugt in Form von Phosphorpentoxid vor. Es können jedoch auch Phosphortri- und Phosphortetroxid Verwendung finden.

Als Phosphate können sowohl Orthophosphate als auch Polyphosphate, Pyrophophate oder Metaphosphate eingesetzt werden. Die Phosphate können beispielsweise durch Neutralisation der entsprechenden Säuren mit einer entsprechenden Base, beispielsweise einer Alkalimetallbase, wie NaOH, oder ggf. auch einer Erdalkalimetallbase hergestellt werden, wobei nicht notwendigerweise alle negativen Ladungen des Phophats durch Metallionen abgesättigt sein müssen. Es können sowohl die Metallphosphate als auch die Metallhydrogenphosphate sowie die Metalldihydrogenphosphate eingesetzt werden, wie beispielsweise Na₃PO₄, Na₂HPO₄, und NaH₂PO₄. Ebenso können die wasserfreien Phosphate wie auch Hydrate der Phosphate eingesetzt werden. Die Phosphate können sowohl in kristalliner als auch in amorpher Form in die Formstoffmischung eingebracht sein.

Unter Polyphosphaten werden insbesondere lineare Phosphate verstanden, die mehr als ein Phosphoratom umfassen, wobei die Phosphoratome jeweils über Sauerstoffbrücken miteinander verbunden sind. Polyphosphate werden durch Kondensation von Orthophosphationen unter Wasserabspaltung erhalten, sodass eine lineare Kette von PO₄-Tetraedern erhalten wird, die jeweils über Ecken verbunden sind. Polyphosphate weisen die allgemeine Formel (O(PO₃)n)⁽ⁿ⁺²⁾⁻ auf, wobei n der Kettenlänge entspricht. Ein Polyphosphat kann bis zu mehreren hundert PO₄-Tetraedern umfassen. Bevorzugt werden jedoch Polyphosphate mit kürzeren Kettenlängen eingesetzt. Bevorzugt weist n Werte von 2 bis 100, insbesondere bevorzugt 5 bis 50 auf. Es können auch höher kondensierte Polyphosphate verwendet werden, d.h. Polyphosphate, in welchen die PO₄-Tetraeder über mehr als zwei Ecken miteinander verbunden sind und daher eine Polymerisation in zwei bzw. drei Dimensionen zeigen.

Über Metaphosphate werden zyklische Strukturen verstanden, die aus PO₄-Tetraedem aufgebaut sind, die jeweils über Ecken miteinander verbunden sind. Metaphosphate weisen die allgemeine Formel ((PO3)n)ⁿ⁻ auf, wobei n mindestens 3 beträgt. Bevorzugt weist n Werte von 3 bis 10 auf.

Es können sowohl einzelne Phosphate verwendet werden als auch Gemische aus verschiedenen Phosphaten und/oder Phosphoroxiden.

Der bevorzugte Anteil der phosphorhaltigen Verbindung, bezogen auf den feuerfesten Formgrundstoff, beträgt zwischen 0,05 und 1,0 Gew.-%. Bei einem Anteil von weniger als 0,05 Gew.% ist kein deutlicher Einfluss auf die Formbeständigkeit der Gießform festzustellen. Übersteigt der Anteil des Phosphats 1,0 Gew.%, nimmt die Heißfestigkeit der Gießform stark ab. Bevorzugt wird der Anteil der phosphorhaltigen Verbindung zwischen 0,1 und 0,5 Gew.% gewählt. Die phosphorhaltige, anorganische Verbindung enthält bevorzugt zwischen 40 und 90 Gew.%, insbesondere bevorzugt zwischen 50 und 80 Gew.% Phosphor, berechnet als P₂O₅. Die phosphorhaltige Verbindung kann an sich in fester oder gelöster Form der Formstoffmischung zugesetzt sein. Bevorzugt ist die phosphorhaltige Verbindung der Formstoffmischung als Feststoff zugesetzt. Wird die phosphorhaltige Verbindung in gelöster Form zugegeben, ist Wasser als Lösungsmittel bevorzugt.

Als weiterer Vorteil eines Zusatzes phosphorhaltiger Verbindungen zu Formstoffmischungen zur Herstellung von Gießformen wurde gefunden, dass die Formen nach dem Metallguss einen sehr guten Zerfall zeigen. Dies trifft für Metalle zu, die niedrigere Gießtemperaturen benötigen, wie Leichtmetalle, insbesondere Aluminium. Beim Eisenguss wirken höhere Temperaturen von mehr als 1200 °C auf die Gießform ein, sodass eine erhöhte Gefahr eines Verglasens der Gießform und damit einer Verschlechterung der Zerfallseigenschaften besteht.

In einer weiteren Ausführungsform kann der erfindungsgemäßen Formstoffmischung eine organische Verbindung (gemäß EP 1 802 409 B1 und WO 2008/046651) zugesetzt sein. Ein geringer Zusatz von organischen Verbindungen kann für spezielle Anwendungen vorteilhaft sein - beispielsweise, um das Entkernverhalten weiter zu verbessern. Allerdings ist ein solcher Zusatz nicht bevorzugt, da dies wiederum mit Emissionen von CO₂ und anderen Pyrolyseprodukten verbunden ist.

Bindemittel, welche Wasser enthalten, weisen im Vergleich zu Bindemitteln auf Basis organischer Lösungsmittel i.A. eine schlechtere Fließfähigkeit auf. Dies bedeutet, dass sich Formwerkzeuge mit engen Durchgängen und mehreren Umlenkungen schlechter füllen lassen. Als Folge davon können die Kerne Abschnitte mit ungenügender Verdichtung besitzen, was wiederum beim Abguss zu Gussfehlern führen kann. Gemäß einer vorteilhaften Ausführungsform enthält die erfindungsgemäße Formstoffmischung einen Anteil an plättchenförmigen Schmiermitteln, insbesondere Grafit oder MoS₂. Überraschend hat sich gezeigt, dass bei einem Zusatz derartiger Schmiermittel, insbesondere von Grafit, auch komplexe Formen mit dünnwandigen Abschnitten hergestellt werden können, wobei die Gießformen durchgängig eine gleichmäßig hohe Dichte und Festigkeit aufweisen, so dass beim Gießen im Wesentlichen keine Gussfehler beobachtet wurden. Die Menge des zugesetzten plättchenförmigen Schmiermittels, insbesondere Grafits, beträgt vorzugsweise 0,05 bis 1 Gew.%, besonders bevorzugt 0,05 bis 0,5 Gew.%, bezogen auf den Formgrundstoff.

An Stelle der plättchenförmigen Schmiermittel können auch oberflächenaktive Substanzen, insbesondere Tenside, eingesetzt werden, welche die Fließfähigkeit der Formstoffmischung verbessern. Geeignete Vertreter dieser Verbindungen sind z.B. in WO 2009/056320 (= US 2010/0326620 A1) beschrieben. Genannt seien hier insbesondere Tenside mit Schwefelsäure- oder Sulfonsäure-Gruppen.
Unter einem oberflächenaktiven Stoff wird ein Stoff verstanden, welcher auf einer wässrigen Oberfläche eine monomolekulare Schicht ausbilden kann, also beispielsweise zur Ausbildung einer Membran befähigt ist. Ferner wird durch einen oberflächenaktiven Stoff die Oberflächenspannung von Wasser herabgesetzt. Geeignete oberflächenaktive Stoffe sind beispielsweise Silikonöle.

Besonders bevorzugt ist der oberflächenaktive Stoff ein Tensid. Tenside umfassen einen hydrophilen Teil und einen hydrophoben Teil, welche in ihren Eigenschaften so ausgewogen sind, dass die Tenside in einer wässrigen Phase beispielsweise Micellen ausbilden oder sich an der Grenzfläche anreichem können.

Es können an sich alle Klassen von Tensiden in der erfindungsgemäßen Formstoffmischung eingesetzt werden. Geeignet sind neben anionischen Tensiden auch nichtionische Tenside, kationische Tenside sowie amphotere Tenside.

Beispielhafte nichtionische Tenside sind beispielsweise ethoxylierte oder propoxylierte langkettige Alkohole, Amine oder Säuren, wie Fettalkoholethoxylate, Alkylphenolethoxylate, Fettaminethoxylate, Fettsäureethoxylate, die entsprechenden Propoxylate oder auch Zuckertenside, wie beispielsweise Polyglykoside auf Fettalkoholbasis. Die Fettalkohole umfassen bevorzugt 8 bis 20 Kohlenstoffatome. Geeignete kationische Tenside sind Alkylammoniumverbindungen und Imidazoliniumverbindungen.

Bevorzugt werden anionische Tenside für die erfindungsgemäße Formstoffmischung verwendet. Das anionische Tensid umfasst als polare, hydrophile Gruppe bevorzugt eine Sulfat-, Sulfonat-, Phosphat- oder Carboxylatgruppe, wobei Sulfat- und Phosphatgruppen besonders bevorzugt sind. Werden sulfatgruppenhaltige anionische Tenside verwendet, so werden bevorzugt die Monoester der Schwefelsäure eingesetzt. Werden Phosphatgruppen als polare Gruppe des anionischen Tensids verwendet, so sind die Mono- und Diester der Orthophosphorsäure besonders bevorzugt.

Gemeinsam ist den in der erfindungsgemäßen Formstoffmischung verwendeten Tensiden, dass der unpolare, hydrophobe Abschnitt bevorzugt von Alkyl-, Aryl- und/oder Aralkylgruppen gebildet wird, die bevorzugt mehr als 6 Kohlenstoffatome, besonders bevorzugt 8 bis 20 Kohlenstoffatome umfassen. Der hydrophobe Abschnitt kann sowohl lineare Ketten als auch verzweigte Strukturen aufweisen. Ebenfalls können Mischungen verschiedener Tenside eingesetzt werden.

Besonders bevorzugte anionische Tenside sind ausgewählt aus der Gruppe von Oleylsulfat, Stearylsulfat, Palmitylsulfat, Myristylsulfat, Laurylsulfat, Decylsuffat, Octylsulfat, 2-Ethylhexylsulfat, 2-Ethytoctylsulfat, 2-Ethyldecylsulfat, Palmitoleylsulfat, Linolylsulfat, Laurylsulfonat, 2-Ethyldecylsulfonat, Palmitylsulfonat, Stearylsulfonat, 2-Ethylstearylsulfonat, Linolylsulfonat, Hexylphosphat, 2-Ethylhexylphosphat, Caprylphosphat, Laurylphosphat, Myristylphosphat, Palmitylphosphat, Palmitoleylphosphat, Oleylphosphat, Stearylphosphat, Poly-(1,2-ethandiyl-)-Phenolhydroxiphosphat, Poly-(1,2-ethandiyl-)-Stearylphosphat, sowie Poly-(1,2-ethandiyl-)-Oleylphosphat.

In der erfindungsgemäßen Formstoffmischung ist der reine oberflächenaktive Stoff bezogen auf das Gewicht des feuerfesten Formgrundstoffs bevorzugt in einem Anteil von 0,001 bis 1 Gew.-%, besonders bevorzugt 0,01 bis 0,2 Gew.-% enthalten. Häufig werden derartige oberflächenaktive Stoffe kommerziell als 20 bis 80%ige Lösung angeboten. In diesem Fall sind insbesondere die wässrigen Lösungen der oberflächenaktiven Stoffe bevorzugt.

Im Prinzip kann der oberflächenaktive Stoff sowohl in gelöster Form, beispielsweise im Binder, als separate Komponente oder aber über eine Feststoffkomponente, die als Trägermaterial fungiert, beispielsweise in einem Additiv, der Formstoffmischung zugesetzt werden. Besonders bevorzugt ist der oberflächenaktive Stoff im Binder gelöst.

Neben den genannten Bestandteilen kann die erfindungsgemäße Formstoffmischung noch weitere Zusätze umfassen. Beispielsweise können interne Trennmittel zugesetzt werden, welche die Ablösung der Gießformen aus dem Formwerkzeug erleichtern. Geeignete interne Trennmittel sind z.B. Calciumstearat, Fettsäureester, Wachse, Naturharze oder spezielle Alkydharze.

Weiter können auch Silane zur erfindungsgemäßen Formstoffmischung gegeben werden, um die Beständigkeit der Formen und Kerne gegenüber hoher Luftfeuchtigkeit und/oder gegenüber Formstoffüberzügen auf Wasserbasis zu erhöhen. Gemäß einer weiteren bevorzugten Ausführungsform enthält die erfindungsgemäße Formstoffmischung einen Anteil zumindest eines Silans. Geeignete Silane sind beispielsweise Aminosilane, Epoxysilane, Mercaptosilane, Hydroxysilane und Ureidosilane. Beispiele für geeignete Silane sind Aminopropyltrimethoxysifan, Hydroxypropyltrimethoxysilan, 3-Ureidopropyltriethoxysilan, Mercaptopropyltrimethoxysilan, Glycidoxypropyltrimethoxysilan, (3,4-Epoxycyclohexyl)trimethoxysilan und N-(Aminoethyl)-aminopropyltrimethoxysilan. Bezogen auf das Bindemittel werden typischerweise 0,1 bis 2 Gew.% Silan eingesetzt, vorzugsweise 0,1 bis 1 Gew.%. Weitere geeignete Additive sind Alkalimetallsilikonate, z.B. Kaliummethylsilikonat, von denen 0,5 bis 15 Gew.%, vorzugsweise 1 bis 10 Gew.% und besonders bevorzugt 1 bis 5 Gew.% bezogen auf das Bindemittel eingesetzt werden können. Enthält die Formstoffmischung Silane und/oder Alkalimethylsilikonate, so erfolgt deren Zugabe üblicherweise in der Form, dass sie vorab in das Bindemittel eingearbeitet werden. Sie können dem Formstoff aber auch als getrennte Komponente zugegeben werden.

Die erfindungsgemäße Formstoffmischung stellt eine Intensive Mischung aus zumindest den genannten Bestandteilen dar. Dabei sind die Teilchen des feuerfesten Formgrundstoffs vorzugsweise mit einer Schicht des Bindemittels überzogen. Durch Verdampfen des im Bindemittel vorhandenen Wassers (ca. 40-70 Gew.%, bezogen auf das Gewicht des Bindemittels) kann dann ein fester Zusammenhalt zwischen den Teilchen des feuerfesten Formgrundstoffs erreicht werden.

Trotz der mit dem erfindungsgemäßen Bindemittelsystem erreichbaren hohen Festigkeiten zeigen die mit der erfindungsgemäßen Formstoffmischung hergestellten Gießformen nach dem Abguss überraschenderweise einen guten Zerfall, insbesondere beim Aluminiumguss. Wie bereits erläutert, wurde auch gefunden, dass mit der erfindungsgemäßen Formstoffmischung Gießformen hergestellt werden können, die auch beim Eisenguss einen sehr guten Zerfall zeigen, sodass sich die Formstoffmischung nach dem Guss ohne weiteres auch aus engen und verwinkelten Abschnitten der Gießform wieder ausgießen lässt. Die Verwendung der aus der erfindungsgemäßen Formstoffmischung hergestellten Formkörper ist daher nicht nur auf den Leichtmetallguss beschränkt. Die Gießformen eignen sich generell zum Gießen von Metallen, wie beispielsweise Buntmetalle oder Elsenmetalle. Besonders bevorzugt eignet sich die erfindungsgemäße Formstoffmischung allerdings für das Gießen von Aluminium.

Die Erfindung betrifft weiter ein Verfahren zur Herstellung von Gießformen für die Metallverarbeitung, wobei die erfindungsgemäße Formstoffmischung verwendet wird. Das erfindungsgemäße Verfahren umfasst die Schritte:
- Bereitstellen der oben beschriebenen Formstoffmischung;
- Formen der Formstoffmischung;
- Aushärten der geformten Formstoffmischung unter Entzug von Wasser durch Heißhärtung unter Erwärmen, wobei die ausgehärtete Gießform erhalten wird.

Bei der Herstellung der erfindungsgemäßen Formstoffmlachung wird im Allgemeinen so vorgegangen, dass zunächst der feuerfeste Formgrundstoff vorgelegt und dann unter Rühren das Bindemittel zugegeben wird. Dabei kann das Wasserglas sowie das pulverförmige Bariumsulfat an sich in beliebiger Reihenfolge zugegeben werden.

Die oben beschriebenen Additive können an sich in jeglicher Form der Formstoffmischung zugesetzt werden. Sie können einzeln oder auch als Mischung zudosiert werden. Gemäß einer bevorzugten Ausführungsform wird das Bindemittel als Zwei-Komponenten-System bereitgestellt, wobei eine erste flüssige Komponente das Wasserglas und ggf. ein Tensid (siehe oben) enthält und eine zweite feste Komponente das pulverförmige Bariumsulfat und ggf. das teilchenförmige Metalloxid, insbesondere das synthetische amorphe Siliciumdioxid und ggf. ein Phosphat und ggf. einen vorzugsweise plättchenförmigen Schmierstoff und ggf. eine organische Verbindung umfassen.

Bei der Herstellung der Formstoffmischung wird der feuerfeste Formgrundstoff in einem Mischer vorgelegt und dann bevorzugt zunächst die feste(n) Komponente(n) des Bindemittels zugegeben und mit dem feuerfesten Formgrundstoff vermischt. Die Mischdauer wird so gewählt, dass eine innige Durchmischung von feuerfestem Formgrundstoff und fester Bindemittelkomponente erfolgt. Die Mischdauer ist abhängig von der Menge der herzustellenden Formstoffmischung sowie von dem verwendeten Mischaggregat. Bevorzugt wird die Mischdauer zwischen 1 und 5 Minuten gewählt. Unter bevorzugt weiterem Bewegen der Mischung wird dann die flüssige Komponente des Bindemittels zugegeben und dann die Mischung solange weiter vermischt, bis sich auf den Körnern des feuerfesten Formgrundstoffs eine gleichmäßige Schicht des Bindemittels ausgebildet hat. Auch hier ist die Mischdauer von der Menge der herzustellenden Formstoffmischung sowie vom verwendeten Mischaggregat abhängig. Bevorzugt wird die Dauer für den Mischvorgang zwischen 1 und 5 Minuten gewählt. Unter einer flüssigen Komponente wird sowohl eine Mischung verschiedener flüssiger Komponenten als auch die Gesamtheit aller flüssigen Einzelkomponenten verstanden, wobei letztere auch einzeln zugegeben werden können. Ebenso wird unter einer festen Komponente sowohl das Gemisch einzelner oder aller der oben beschriebenen festen Komponenten als auch die Gesamtheit aller fester Einzelkomponenten verstanden, wobei letztere gemeinsam oder auch nacheinander zur Formstoffmischung gegeben werden können. Gemäß einer anderen Ausführungsform kann auch zunächst die flüssige Komponente des Bindemittels zum feuerfesten Formgrundstoff gegeben werden und erst dann die feste Komponente der Mischung zugeführt werden. Gemäß einer weiteren Ausführungsform wird zunächst 0,05 bis 0,3% Wasser, bezogen auf das Gewicht des Formgrundstoffes, zum feuerfesten Formgrundstoff gegeben und erst anschließend die festen und flüssigen Komponenten des Bindemittels zugegeben.

Bei dieser Ausführungsform kann ein überraschender positiver Effekt auf die Verarbeitungszeit der Formstoffmischung erzielt werden. Die Erfinder nehmen an, dass die wasserentziehende Wirkung der festen Komponenten des Bindemittels auf diese Weise reduziert und der Aushärtevorgang dadurch verzögert wird. Die Formstoffmischung wird anschließend in die gewünschte Form gebracht. Dabei werden die für die Formgebung üblichen Verfahren verwendet. Beispielsweise kann die Formstoffmischung mittels einer Kernschießmaschine mit Hilfe von Druckluft in das Formwerkzeug geschossen werden. Die Formstoffmischung wird anschließend ausgehärtet, wobei alle Verfahren herangezogen werden können, die bei Bindemitteln auf der Basis von Wasserglas bekannt sind, z.B. Heißhärtung, Begasen mit CO₂ oder Luft bzw, einer Kombination von beidem sowie Härtung durch flüssige oder feste Katalysatoren.

Bei der Heißhärtung wird der Formstoffmischung Wasser entzogen. Dadurch werden vermutlich auch Kondensationsreaktionen zwischen Silanolgruppen initiiert, sodass eine Vernetzung des Wasserglases eintritt.

Das Erwärmen kann beispielsweise im Formwerkzeug erfolgen. Es ist möglich, die Gießform bereits im Formwerkzeug vollständig auszuhärten. Es ist aber auch möglich, die Gießform nur in ihrem Randbereich auszuhärten, so dass sie eine ausreichende Festigkeit aufweist, um aus dem Formwerkzeug entnommen werden zu können. Die Gießform kann dann anschließend vollständig ausgehärtet werden, indem ihr weiteres Wasser entzogen wird. Dies kann beispielsweise in einem Ofen erfolgen. Der Wasserentzug kann beispielsweise auch erfolgen, indem das Wasser bei vermindertem Druck verdampft wird.

Die Aushärtung der Gießformen kann durch Einblasen von erhitzter Luft in das Formwerkzeug beschleunigt werden. Bei dieser Ausführungsform des Verfahrens wird ein rascher Abtransport des im Bindemittel enthaltenen Wassers erreicht, wodurch die Gießform in für eine industrielle Anwendung geeigneten Zeiträumen verfestigt wird. Die Temperatur der eingeblasenen Luft beträgt vorzugsweise 100 °C bis 180 °C, insbesondere bevorzugt 120 °C bis 150 °C. Die Strömungsgeschwindigkeit der erhitzten Luft wird vorzugsweise so eingestellt, dass eine Aushärtung der Gießform in für eine industrielle Anwendung geeigneten Zeiträumen erfolgt. Die Zeiträume hängen von der Größe der hergestellten Gießformen ab. Angestrebt wird eine Aushärtung im Zeitraum von weniger als 5 Minuten, vorzugsweise weniger als 2 Minuten. Bei sehr großen Gießformen können jedoch auch längere Zeiträume erforderlich sein.

Die Entfernung des Wassers aus der Formstoffmischung kann auch in der Weise erfolgen, dass das Erwärmen der Formstoffmischung durch Einstrahlen von Mikrowellen bewirkt wird. Die Einstrahlung der Mikrowellen wird aber bevorzugt vorgenommen, nachdem die Gießform aus dem Formwerkzeug entnommen wurde. Dazu muss die Gießform jedoch bereits eine ausreichende Festigkeit aufweisen. Wie bereits erläutert, kann dies beispielsweise dadurch bewirkt werden, dass zumindest eine äußere Schale der Gießform bereits im Formwerkzeug ausgehärtet wird.

Die erfindungsgemäßen Verfahren eignen sich an sich für die Herstellung aller für den Metallguss üblicher Gießformen, also beispielsweise von Kernen und Formen. Besonders vorteilhaft können dabei auch Gießformen hergestellt werden, die sehr dünnwandige Abschnitte umfassen.

Die aus der erfindungsgemäßen Formstoffmischung bzw. mit dem erfindungsgemäßen Verfahren hergestellten Gießformen weisen eine hohe Festigkeit unmittelbar nach der Herstellung auf, ohne dass die Festigkeit der Gießformen nach dem Aushärten so hoch ist, dass Schwierigkeiten nach der Herstellung des Gussstücks beim Entfernen der Gießform auftreten. Weiterhin weisen diese Gießformen eine hohe Stabilität bei erhöhter Luftfeuchtigkeit auf, d.h. die Gießformen können überraschenderweise auch über längere Zeit hinweg problemlos gelagert werden. Als Vorteil weist die Gießform eine sehr hohe Stabilität bei mechanischer Belastung auf, sodass auch dünnwandige Abschnitte der Gießform verwirklicht werden können, ohne dass diese durch den metallostatischen Druck beim Gießvorgang deformiert werden. Ein weiterer Gegenstand der Erfindung ist daher eine Gießform, welche nach dem oben beschriebenen erfindungsgemäßen Verfahren erhalten wurde.

Die erfindungsgemäße Gießform eignet sich allgemein für den Metallguss, insbesondere Leichtmetallguss. Besonders vorteilhafte Ergebnisse werden beim Aluminiumguss erhalten.

Im Weiteren wird die Erfindung anhand von Beispielen ohne auf diese beschränkt zu sein näher erläutert.

### Beispiele

### 1) Einfluss verschiedener Formstoffmischungen auf die Biegefestigkeiten

Für die Prüfung einer Formstoffmischung wurden sog. Georg-Fischer-Prüfriegel hergestellt. Unter Georg-Fischer-Prüfriegeln werden quaderförmige Prüfriegel mit den Abmessungen 150 mm x 22,36 mm x 22,36 mm verstanden. Die Zusammensetzungen der Formstoffmischungen sind in Tabelle 1 angegeben. Zur Herstellung der Georg-Fischer-Prüfriegel wurde wie folgt vorgegangen:
- Die in Tabelle 1 aufgeführten Komponenten wurden in einem Laborflügelmischer (Firma Vogel & Schemmann AG, Hagen, DE) gemischt. Dazu wurde zunächst der Quarzsand vorgelegt und unter Rühren das Wasserglas zugegeben. Als Wasserglas wurde ein Natriumwasserglas verwendet, das Anteile von Kalium aufwies. In den nachfolgenden Tabellen ist das Modul daher mit SiO₂:M₂O angegeben, wobei M die Summe aus Natrium und Kalium angibt. Nachdem die Mischung für eine Minute gerührt worden war, wurden ggf. amorphes SiO₂ und/oder Bariumsulfat unter weiterem Rühren hinzugegeben. Die Mischung wurde anschließend noch für eine weitere Minute gerührt;
- Die Formstoffmischungen wurden in den Vorratsbunker einer H 2,5 Hot-Box-Kernschießmaschine der Firma Röperwerk - Gießereimaschinen GmbH, Viersen, DE, überführt, deren Formwerkzeug auf 180 °C erwärmt war;
- Die Formstoffmischungen wurden mittels Druckluft (5 bar) in das Formwerkzeug eingebracht und verblieben für weitere 35 Sekunden im Formwerkzeug;
- Zur Beschleunigung der Aushärtung der Mischungen wurde während der letzten 20 Sekunden Heißdft (2 bar, 100 °C beim Eintritt in das Werkzeug) durch das Formwerkzeug geleitet;
- Das Formwerkzeug wurde geöffnet und die Prüfriegel entnommen.

Zur Bestimmung der Biegefestigkeiten wurden die Prüfriegel in ein Georg-Fischer-Festigkeitsprüfgerät, ausgerüstet mit einer 3-Punkt-Biegevorrichtung (DISA Industrie AG, Schaffhausen, CH) eingelegt und die Kraft gemessen, welche zum Bruch der Prüfriegel führte. Die Biegefestigkeiten wurden nach folgendem Schema gemessen:
- 10 Sekunden nach der Entnahme (Heißfestigkeiten)
- 1 Stunde nach Entnahme (Kaltfestigkeiten)

Die Indizes in Tabelle 1 haben jeweils folgende Bedeutung:
a) Alkaliwasserglas mit einem Gewichtsmodul SiO₂:M₂O von ca. 2.1: bezogen auf das gesamte Wasserglas. Feststoffgehalt von ca. 35%
b) Microsilica weiß GHL DL971W (amorphes Si02, Fa. RW silicium GmbH; Entstehung bei der metallurgischen Erzeugung von Silicium im Lichtbogenofen)
c) Schwerspatmehl C11 (natürliches Bariumsulfat, Fa. Sachtleben Bergbau GmbH & Co KG)
d) Bariumsulfat (gefällt, Fa. Sigma Aldrich)
e) Boronid SCP1 (Bornitrid, Fa. ESK Ceramics GmbH & Co. KG)
f) Boronid S6 (hexagonales Bornitrid, Fa. ESK Ceramics GmbH & Co. KG)
g) Boronid S12 (hexagonales Bornitrid, Fa. ESK Ceramics GmbH & Co. KG)
h) Korund (Korund, Fa. Treibacher Schleifmittel)
i) Talkum H100 (Fa. Franz Mandt GmbH & Co. KG)^{k)} Glanzpudergrafit 85 (Fa. Technografit GmbH)
l) Zirkonsilikat (Fa. Cofermin Rohstoffe GmbH & Co. KG)

Die gemessenen Biegefestigkeiten sind in Tabelle 2 zusammengefasst.

Die Beispiele 1.01 bis 1.10 verdeutlichen, dass sich das für die automatisierte Serienfertigung nötige Festigkeitsniveau erreichen lässt, wenn der Formstoffmischung ein synthetisches amorphes Siliziumdioxid zugesetzt ist. Der Zusatz von unterschiedlichen Mengen an Bariumsulfat allein führt nicht zu der nötigen Steigerung der Festigkeiten, insbesondere der Heißfestigkeiten. Durch die Kombination aus synthetischem amorphem Siliziumdioxid mit Bariumsulfat (Beispiele 1.7 bis 1.10) lassen sich hingegen Festigkeitsniveaus erreichen, die sich mit solchen Formstoffmischungen vergleichen lassen, denen nur synthetisches amorphes Siliziumdioxid zugesetzt wurde (Beispiel 1.02). Ferner wird deutlich, dass es vorteilhaft ist, wenn der Zusatz an Bariumsulfat nicht zu hoch ist, da die Festigkeiten, insbesondere die Heißfestigkeiten, bei erhöhten Zugabemengen sinken.

Ein Vergleich der Beispiele 1.07 mit 1.11 zeigt, dass es keinen Unterschied macht, ob natürliches oder synthetisches Bariumsulfat eingesetzt wird. Die Beispiele 1.07, 1.11 bis 1.18 belegen, dass sich gute Festigkeitsniveaus (insb. Sofortfestigkeiten) mit den Zusätzen BaSO₄, Korund, Talkum, Zirkonsilikat und Grafit realisieren lassen. Hingegen zeigen Zusätze von Bornitrid (unabhängig von den Teilchengrößen etc., Beispiele 1.12 - 1.14) zu jeweiligen Formstoffmischungen deutlich reduzierte Festigkeitsniveaus, insbesondere Sofortfestigkeiten.

**Tabelle 1**

| *Zusammensetzungen der Formstoffmischungen* | | | | | | |
|---|---|---|---|---|---|---|
| | Quarzsand H32 | Alkaliwasserglas | Amorphes SiO₂ | Bariumsulfat | Andere Additive | |
| 1.01 | 100 GT | 2,0 GT ^{a)} | - | - | - | Vergleich |
| 1.02 | 100 GT | 2,0 GT ^{a)} | 0,5 GT ^{b)} | - | - | Vergleich |
| 1.03 | 100 GT | 2,0 GT ^{a)} | - | 0,3 GT ^{c)} | - | erfindungsgem. |
| 1.04 | 100 GT | 2,0 GT ^{a)} | - | 0,5 GT ^{c)} | - | efindungsgem. |
| 1.05 | 100 GT | 2,0 GT ^{a)} | - | 1,0 GT ^{c)} | - | erfindungsgem. |
| 1.06 | 100 GT | 2,0 GT ^{a)} | - | 2,0 GT ^{c)} | - | erfindungsgem. |
| 1.07 | 100 GT | 2,0 GT ^{a)} | 0,5 GT ^{b)} | 0,3 GT ^{c)} | - | erfindungsgem. |
| 1.08 | 100 GT | 2,0 GT ^{a)} | 0,5 GT ^{b)} | 0,5 GT ^{c)} | - | erfindungsgem. |
| 1.09 | 100 GT | 2,0 GT ^{a)} | 0,5 GT ^{b)} | 1,0 GT ^{c)} | - | erfindungsgem. |
| 1.10 | 100 GT | 2,0 GT ^{a)} | 0,5 GT ^{b)} | 2,0 GT ^{c)} | - | erfindungsgem. |
| 1.11 | 100 GT | 2,0 GT ^{a)} | 0,5 GT ^{b)} | 0,3 GT ^{d)} | - | erfindungsgem. |
| 1.12 | 100 GT | 2,0 GT ^{a)} | 0,5 GT ^{b)} | - | 0,3 GT ^{e)} | Vergleich |
| 1.13 | 100 GT | 2,0 GT ^{a)} | 0,5 GT ^{b)} | - | 0,3 GT ^{f)} | Vergleich |
| 1,14 | 100 GT | 2,0 GT ^{a)} | 0,5 GT ^{b)} | - | 0,3 GT ^{g)} | Vergleich |
| 1.15 | 100 GT | 2,0 GT ^{a)} | 0,5 GT ^{b)} | - | 0,3 GT ^{h)} | Vergleich |
| 1.16 | 100 GT | 2,0 GT ^{a)} | 0,5 GT ^{b)} | - | 0,3 GT ⁱ⁾ | Vergleich |
| 1.17 | 100 GT | 2,0 GT ^{a)} | 0,5 GT ^{b)} | - | 0,3 GT ^{k)} | Vergleich |
| 1.18 | 100 GT | 2,0 GT ^{a)} | 0,5 GT ^{b)} | - | 0,3 GT ^{l)} | Vergleich |

| | | | | | | |
|---|---|---|---|---|---|---|
| Vergleich = nicht erfindungsgemäß | | | | | | |

**Tabelle 2**

| *Biegefestigkeiten* | | | |
|---|---|---|---|
| | Heißfestigkeiten [N/cm²] | Festigkeiten nach 1 h [N/cm²] | |
| 1.01 | 90 | 380 | Vergleich, nicht erfindungsgemäß |
| 1.02 | 150 | 470 | Vergleich, nicht erfindungsgemäß |
| 1.03 | 95 | 365 | erfindungsgemäß |
| 1.04 | 100 | 360 | erfindungsgemäß |
| 1.05 | 100 | 350 | erfindungsgemäß |
| 1.06 | 100 | 300 | erfindungsgemäß |
| 1.07 | 160 | 460 | erfindungsgemäß |
| 1.08 | 140 | 470 | erfindungsgemäß |
| 1.09 | 140 | 440 | erfindungsgemäß |
| 1.10 | 125 | 410 | erfindungsgemäß |
| 1.11 | 145 | 480 | erfindungsgemäß |
| 1.12 | 95 | 345 | Vergleich, nicht erfindungsgemäß |
| 1.13 | 100 | 315 | Vergleich, nicht erfindungsgemäß |
| 1.14 | 100 | 340 | Vergleich, nicht erfindungsgemäß |
| 1.15 | 150 | 470 | Vergleich, nicht erfindungsgemäß |
| 1.16 | 135 | 460 | Vergleich, nicht erfindungsgemäß |
| 1.17 | 130 | 410 | Vergleich, nicht erfindungsgemäß |
| 1.18 | 155 | 460 | Vergleich, nicht erfindungsgemäß |

### 2) Verbesserung der Gussoberfläche

Der Einfluss des Bariumsulfats als Formstoffzusatz auf die Gussoberfläche wurde untersucht und beurteilt im Vergleich zu nicht erfindungsgemäßen Formstoffmischungen. Zu diesem Zweck wurde wie folgt verfahren:
- Georg-Fischer-Prüfriegel der Formstoffmischungen 1.01 bis 1.18 in Tabelle 1 wurden in eine Sandgießform derart eingebaut, dass während des Gießprozesses drei der vier Längsseiten mit dem Gießmetall in Verbindung kommen.
- Gegossen wurde mit einer Aluminiumlegierung Typ 226 bei einer Gießtemperatur von ca. 735 °C.
- Nach Abkühlen der Gießform wurde das Gussstück mittels hochfrequenter Hammerschläge vom Sand befreit.
- Die Gussteile wurden anschließend hinsichtlich der verbleibenden Sandanhaftungen und der Rauigkeiten beurteilt.

Die Gussausschnitte der Mischungen 1.01 und 1.02 zeigen deutlich mehr Sandanhaftungen als die der Mischungen 1.03 bis 1.11. Der positive Effekt des Bariumsulfats auf die Gussoberflächen wird hier sehr deutlich. Auch zeigt ein Vergleich der Gussoberfläche für Mischungen 1.07 und 1.11, dass sich der gewünschte Effekt sowohl beim natürlichen als auch beim synthetischen Bariumsulfat einstellt. Es spielt offensichtlich keine Rolle, ob synthetisches oder natürliches Bariumsulfat eingesetzt wird.

Ein Vergleich der Gussausschnitte der Mischungen 1.07 und 1.11 bis 1.18 zeigt, dass nur die Zusätze von Bariumsulfat oder hexagonalem Bomitrid zu verbesserten Oberflächen führen. Mithilfe der anderen Additive (Korund, Talkum, Grafit, Zirkonsilikat) ließ sich keine oder zumindest kaum eine Verbesserung der Oberfläche beobachten.

## Patentansprüche

1. Formstoffmischung zur Herstellung von Gießformen für die Metallverarbeitung, mindestens umfassend:
• einen feuerfesten Formgrundstoff;
• ein auf Wasserglas basiertes Bindemittel;
• Bariumsulfat; und
• teilchenförmige Metalloxide ausgewählt aus der Gruppe von amorphem SiO₂, Aluminiumoxiden und Alumosilikaten und deren Mischungen.

2. Formstoffmischung nach Anspruch 1, wobei die durchschnittliche Teilchengröße des Bariumsulfats in der Formstoffmischung zwischen 0,1 µm und 60 µm beträgt.

3. Formstoffmischung nach Anspruch 1 oder 2, wobei das Bariumsulfat zu 0,02 bis 5,0 Gew.%, bevorzugt 0,05 bis 3,0 Gew.%, Insbesondere bevorzugt 0,1 bis 2,0 Gew.% oder 0,3 bis 0,89 Gew.%, in der Formstoffmischung enthalten ist.

4. Formstoffmischung nach zumindest einem der vorherigen Ansprüche, wobei die Formstoffmischung maximal 0,2 Gew.% organische Verbindungen enthält.

5. Formstoffmischung nach zumindest einem der vorherigen Ansprüche, wobei das Wasserglas ein molares Modul SiO₂/M₂O von 1,6 bis 4,0, vorzugsweise 2,0 bis kleiner 3,5, mit M gleich Lithium, Natrium und/oder Kalium aufweist.

6. Formstoffmischung nach zumindest einem der vorherigen Ansprüche, wobei die Formstoffmischung 0,5 bis 5 Gew.% Wasserglas, vorzugsweise 1 bis 3,5 Gew.% Wasserglas, enthält, bezogen auf den Formgrundstoff, wobei der Feststoffanteil des Wasserglases 25 bis 65 Gew.%, vorzugsweise 30 bis 60 Gew.%, beträgt.

7. Formstoffmischung nach zumindest einem der vorherigen Ansprüche, wobei die teilchenförmigen Metalloxide eine mittiere Primärpartikelgröße zwischen 0,05 mm und 10 mm, insbesondere zwischen 0,1 mm und 5 mm, besonders bevorzugt zwischen 0,1 mm und 2 mm, und unabhängig hiervon eine BET-Oberfläche von 1 bis 200 m²/g, insbesondere 1 bis 50 m²/g und besonders bevorzugt 1 bis 30 m²/g aufweisen.

8. Formstoffmischung nach Anspruch 7, wobei die Formstoffmischung amorphes SiO₂ in Mengen von 0,1 bis 2 Gew.%, vorzugsweise 0,1 bis 1,5 Gew.%, jeweils bezogen auf den Formgrundstoff enthält und unabhängig hiervon 2 bis 60 Gew.%, besondere bevorzugt 4 bis 50 Gew.% bezogen auf das Gewicht des Bindemittels, vorzugsweise von 30 bis 60 Gew.%.

9. Formstoffmischung nach Anspruch 1 oder 8, wobei das eingesetzte amorphe SiO₂ einen Wassergehalt von kleiner 15 Gew.%, insbesondere kleiner 5 Gew.% und besonders bevorzugt kleiner 1 Gew.% aufweist und unabhängig insbesondere als Pulver eingesetzt wird.

10. Formstoffmischung nach zumindest einem der vorherigen Ansprüche **gekennzeichnet durch** eines oder mehrere der folgenden Merkmale:
a) die Formstoffmischung enthält weiterhin Tenside, vorzugsweise ausgewählt aus der Gruppe der anionischen Tenside umfassend Oleylsulfat, Stearylsulfat, Palmitylsulfat, Myristylsulfat, Laurylsulfat, Decylsulfat, Octylsulfat, 2-Ethylhexylsulfat, 2-Ethyloctylsulfat, 2-Ethyldecylsulfat, Palmitoleylsulfat, Linolylsuifat, Laurylsulfonat, 2-Ethyldecylsulfonat, Palmitylsulfonat, Stearylsulfonat, 2-Ethylstearylsulfonat, Linolylsulfonat, Hexylphosphat, 2-Ethylhexylphosphat, Caprylphosphat, Laurylphosphat, Myristylphosphat, Palmitylphosphat, Palmitoleylphosphat, Oleylphosphat, Stearylphosphat, Poly-(1,2-ethandiyl-)-Phenolhydroxiphosphat, Poly-(1,2-ethandiyl-)-Stearylphosphat, sowie Poly-(1,2-ethandiyl-)-Oleylphosphat,
wobei jeweils weiter bevorzugt das Tensid bezogen auf das Gewicht des feuerfesten Formgrundstoffs in einem Anteil von 0,001 bis 1 Gew. %, besonders bevorzugt 0,01 bis 0,2 Gew. % in der Formstoffmischung enthalten ist;
b) die Formstoffmischung enthält weiterhin Graphit, vorzugsweise von 0,05 bis 1 Gew.%, insbesondere 0,05 bis 0,5 Gew.%, bezogen auf das Gewicht des feuerfesten Formgrundstoffs;
c) die Formstoffmischung enthält weiterhin zumindest eine phosphorhaltige Verbindung, vorzugsweise von 0,05 bis 1,0 Gew. %, besonders bevorzugt 0,1 bis 0,5 Gew. %, bezogen auf das Gewicht des feuerfesten Formgrurtdstoffs.

11. Verfahren zur Herstellung von Gießformen oder Kernen umfassend:
• Bereitstellen der Formstoffmischung nach zumindest einem der Ansprüche 1 bis 10,
• Einbringen der Formstoffmischung in eine Form, und
• Aushärten der Formstoffmischung unter Entzug von Wasser durch Heißhärtung unter Erwärmen.

12. Verfahren nach Anspruch 11, wobei die Formstoffmischung mittels einer Kernschießmaschine mit Hilfe von Druckluft in die Form eingebracht wird und die Form ein Formwerkzeug ist und das Formwerkzeug mit einem oder mehreren Gasen durchströmt wird.

13. Verfahren nach Anspruch 11 oder 12, wobei die Formstoffmischung zum Aushärten einer Temperatur von zumindest 100°C für unter 5 min ausgesetzt wird und unabhängig hiervon die Formstoffmischung erhitzt wird insbesondere bevorzugt durch Einblasen von Luft von einer Temperatur von 100 °C bis 180 °C in das Formwerkzeug.

14. Form oder Kern herstellbar nach zumindest einem der Ansprüche 11 bis 13.

15. Verfahren zum Aluminiumguss umfassend
• Bereitstellen der Formstoffmischung nach zumindest einem der Ansprüche 1 bis 10,
• Einbringen der Formstoffmischung in eine Form,
• Aushärten der Formstoffmischung unter Entzug von Wasser durch Heißhärtung unter Erwärmen zur Herstellung einer Gießform oder eines Kerns, und
• Gießen von Aluminium oder einer Aluminiumiegierung in die Gießform bzw, in Kontaktbringen des flüssigen Aluminiums oder einer flüssigen Aluminiumlegierung mit dem Kern.

16. Verfahren gemäß Anspruch 15, wobei die Aushärtung zur Herstellung einer Gießform oder eines Kerns eine Heißhärtung ist, insbesondere durch Aussetzen der Formstoffmischung einer Temperatur von zumindest 100°C für unter 5 min, und unabhängig hiervon insbesondere bevorzugt durch Einblasen von Luft von einer Temperatur von 100 °C bis 180 °C in das Formwerkzeug.

17. Verwendung von Bariumsulfat als Bestandteil von Gießformen und Kernen für den Metallguss, insbesondere dem Guss von Aluminium oder Aluminiumlegierungen, zum Erhalt von Gussstücken mit einer verbesserten Gussoberfläche, wobei die Gießformen und Kerne mit Wasserglas in Gegenwart teilchenförmiger Metelloxide ausgewählt aus der Gruppe von amorphem SiO₂, Aluminiumoxiden und Alumosilikaten und deren Mischungen ausgehärtet wurden.

## Claims

1. Molding material mixture for producing casting molds for metal processing, comprising at least:
- a refractory basic molding material;
- a binder based on water glass;
- barium sulfate; and
- particulate metal oxides selected from the group of amorphous SiO₂, aluminum oxides and aluminosilicates and mixtures thereof.

2. Molding material mixture according to Claim 1, wherein the mean particle size of barium sulfate in the molding material mixture is between 0.1 µm and 90 µm.

3. Molding material mixture according to Claim 1 or 2, wherein the content of barium sulfate is 0.02 to 5.0 wt%, preferably 0.05 to 3.0 wt%, especially preferably 0.1 to 2.0 wt% or 0.3 to 0.99 wt%, in the molding material mixture.

4. Molding material mixture according to at least one of the preceding claims, wherein the molding material mixture contains at most 0.2 wt% organic compounds.

5. Molding material mixture according to at least one of the preceding claims, wherein the waterglass has a molar modulus SiO₂/M₂O from 1.6 to 4.0, preferably 2.0 to less than 3.5, where M stands for lithium, sodium and/or potassium.

6. Molding material mixture according to at least one of the preceding claims, wherein the molding material mixture contains 0.5 to 5 wt% waterglass, preferably 1 to 3.5 wt% waterglass, relative to the basic molding material, wherein the solid matter content of the waterglass is 25 to 65 wt%, preferably 30 to 60 wt%.

7. Molding material mixture according to at least one of the preceding claims, wherein the particulate metal oxides have a mean primary particle size between 0.05 µm and 10 µm, in particular between 0.1 µm and 5 µm, particularly preferably between 0.1 µm and 2 µm, and independently thereof a BET surface area from 1 to 200 m²/g, in particular 1 to 50 m²/g and particularly preferably 1 to 30 m²/g.

8. Molding material mixture according Claim 7, wherein the molding material mixture contains amorphous SiO₂ in quantities from 0.1 to 2 wt%, preferably 0.1 to 1.5 wt%, in each case relative to the basic molding material, and independently thereof 2 to 60 wt%, particularly preferably 4 to 50 wt%, relative to the weight of the binder, preferably from 30 to 60 wt%.

9. Molding material mixture according to Claim 1 or 8, wherein the amorphous SiO₂ used has a water content of less than 15 wt%, in particular less than 5 wt% and particularly preferably less than 1 wt%, and independently is used in particular in powder form.

10. Molding material mixture according to at least one of the preceding claims, **characterised by** one or more of the following features:
a) the molding material mixture moreover contains surfactants selected preferably from the group of the anionic surfactants, comprising oleyl sulfate, stearyl sulfate, palmityl sulfate, myristyl sulfate, lauryl sulfate, decyl sulfate, octyl sulfate, 2-ethylhexyl sulfate, 2-ethoxyoctyl sulfate, 2-ethyldecyl sulfate, palmitoleyl sulfate, linolyl sulfate, lauryl sulfonate, 2-ethyldecyl sulfonate, palmityl sulfonate, stearyl sulfonate, 2-ethyl stearyl sulfonate, linolyl sulfonate, hexyl phosphate, 2-ethylhexyl phosphate, capryl phosphate, lauryl phosphate, myristyl phosphate, palmityl phosphate, palmitoleyl phosphate, oleyl phosphate, stearyl phosphate, poly(1,2-ethandiyl)phenol hydroxy phosphate, poly(1,2-ethandiyl)stearyl phosphate, and poly(1,2-ethandiyl)oleyl phosphate,
wherein further the content of the surfactant, relative to the weight of the refractory basic molding material, is preferably from 0.001 to 1 wt%, particularly preferably 0.01 to 0.2 wt%, in the molding material mixture;
b) the molding material mixture moreover contains graphite, preferably from 0.05 to 1 wt%, in particular 0.05 to 0.5 wt%, relative to the weight of the refractory basic molding material;
c) the molding material mixture moreover contains at least one phosphorus-containing compound, preferably from 0.05 to 1.0 wt%, particularly preferably from 0.1 to 0.5 wt%, relative to the weight of the refractory basic molding material.

11. Method for producing casting molds or cores, comprising:
- preparing the molding material mixture according to at least one of Claims 1 to 10;
- introducing the molding material mixture into a mold, and
- curing the molding material mixture by means of removal of water through hot curing by applying heat.

12. Method according to Claim 11, wherein the molding material mixture is introduced into the mold by means of a core shooting machine using pressurized air, and the mold is a molding tool, and one or more gases flow(s) is/are run through the molding tool.

13. Method according to Claim 11 or 12, wherein the molding material mixture is exposed for curing to a temperature of at least 100 °C for less than 5 min, and independently thereof the molding material mixture is heated, especially preferably by blowing air at a temperature from 100 °C to 180 °C into the molding tool.

14. Mold or core that can be produced according to at least one of Claims 11 to 13.

15. Method for aluminum casting, comprising
- preparing the molding material mixture according to at least one of Claims 1 to 10,
- introducing the molding material mixture into a mold,
- curing the molding material mixture by means of removal of water through hot curing by applying heat in order to produce a casting mold or a core, and
- pouring aluminum or an aluminum alloy into the casting mold or bringing the liquid aluminum or a liquid aluminum alloy in contact with the core.

16. Method according to Claim 15, wherein the curing for producing a casting mold or a core is a hot curing, in particular by exposure of the molding material mixture to a temperature of at least 100 °C for less than 5 min, and independently thereof especially preferably by blowing air at a temperature from 100 °C to 180 °C into the molding tool.

17. Use of barium sulfate as component of casting molds and cores for metal casting, particularly for casting aluminum or aluminum alloys for the obtention of cast pieces having an improved cast surface, wherein the casting molds and cores are cured with waterglass in the presence of particulate metal oxides selected from the group of amorphous SiO₂, aluminum oxides and aluminosilicates and mixtures thereof.

## Revendications

1. Mélange de matières de moulage pour la fabrication de moules de coulée pour le travail des métaux, comportant au moins :
• une matière de base de moulage réfractaire ;
• un liant à base de verre soluble ;
• du sulfate de baryum ; et
• des oxydes métalliques particulaires choisis dans le groupe de SiO₂ amorphe, des oxydes d'aluminium et des silicates d'aluminium et de leurs mélanges.

2. Mélange de matières de moulage selon la revendication 1, dans lequel la grosseur moyenne des particules du sulfate de baryum dans le mélange des matières de moulage s'élève entre 0,1 µm et 90 µm.

3. Mélange de matières de moulage selon l'une des revendications 1 ou 2, dans lequel le sulfate de baryum est contenu dans le mélange des matières de moulage à savoir de 0,02 à 5,0 % en poids, de préférence 0,05 à 3,0 % en poids, de façon particulièrement préférée 0,1 à 2,0 % en poids ou 0,3 à 0,99 % en poids.

4. Mélange de matières de moulage selon au moins l'une des revendications précédentes, dans lequel le mélange des matières de moulage contient au maximum 0,2 % en poids de composés organiques.

5. Mélange de matières de moulage selon au moins l'une des revendications précédentes, dans lequel le verre soluble présente un module molaire SiO₂/M₂O de 1,6 à 4,0, de préférence de 2,0 à moins de 3,5, avec M étant égal à lithium, sodium et/ou potassium.

6. Mélange de matières de moulage selon au moins l'une des revendications précédentes, dans lequel le mélange des matières de moulage contient 0,5 à 5 % en poids de verre soluble, de préférence 1 à 3,5 % en poids de verre soluble, par rapport à la matière de base de moulage, la fraction de matières solides du verre soluble s'élevant à 25 à 65 % en poids, de préférence à 30 à 60 % en poids.

7. Mélange de matières de moulage selon au moins l'une des revendications précédentes, dans lequel les oxydes métalliques particulaires présentent une grosseur moyenne de particules primaires entre 0,05 µm et 10 µm, en particulier entre 0,1 µm et 5 µm, de façon particulièrement préférée entre 0,1 µm et 2 µm, et indépendamment de ceci une surface spécifique BET de 1 à 200 m²/g, en particulier 1 à 50 m²/g et de façon particulièrement préférée 1 à 30 m²/g.

8. Mélange de matières de moulage selon la revendication 7, dans lequel le mélange des matières de moulage contient SiO₂ amorphe dans des quantités de 0,1 à 2 % en poids, de préférence de 0,1 à 1,5 % en poids, à chaque fois par rapport à la matière de base de moulage, et indépendamment de ceci, de 2 à 60 % en poids, de façon particulièrement préférée de 4 à 50 % en poids par rapport au poids du liant, de préférence de 30 à 60 % en poids.

9. Mélange de matières de moulage selon l'une des revendications 1 ou 8, dans lequel le SiO₂ amorphe utilisé présente une teneur en eau de moins de 15 % en poids, en particulier de moins 5 % en poids et de façon particulièrement préférée de moins de 1 % en poids et indépendamment est utilisé en particulier en tant que poudre.

10. Mélange de matières de moulage selon au moins l'une des revendications précédentes, **caractérisé par** une ou plusieurs des caractéristiques suivantes :
a) le mélange de matières de moulage contient en outre des tensio-actifs, de préférence choisis dans le groupe des tensio-actifs anioniques comprenant l'oléylsulfate, le stéarylsulfate, le palmitylsulfate, le myristylsulfate, le laurylsulfate, le décylsulfate, l'octylsulfate, le 2-éthylhexylsulfate, le 2-éthyloctylsulfate, le 2-éthyldécylsulfate, le palmitoléylsulfate, le linolylsulfate, le laurylsulfonate, le 2-éthyldécylsulfonate, le palmitylsulfonate, le 2-éthylstéarylsulfonate, le linolylsulfonate, l'hexylphosphate, le 2-éthylhexylphosphate, le caprylphosphate, le laurylphosphate, le myristylphosphate, le palmitylphosphate, le palmitoléylphosphate, l'oléylphosphate, le stéarylphosphate, le poly-(1,2-éthanediyl-)-phénolhydroxyphosphate, le poly-(1,2-éthanediyl-)-stéarylphosphate, ainsi que le poly-(1,2-éthanediyl-)-oléylphosphate,
où à chaque fois de façon davantage préférée le tensioactif est contenu par rapport au poids de la matière de base de moulage réfractaire dans une quantité de 0,001 à 1 % en poids, de façon particulièrement préférée de 0,01 à 0,2 % en poids dans le mélange des matières de moulage ;
b) le mélange des matières de moulage contient en outre du graphite, de préférence à raison de 0,05 à 1 % en poids, en particulier de 0,05 à 0,5 % en poids, par rapport au poids de la matière de base de moulage réfractaire ;
c) le mélange de matières de moulage contient en outre au moins un composé à teneur en phosphore, de préférence à raison de 0,05 à 1,0 % en poids, de façon particulièrement préférée de 0,1 à 0,5 % en poids, par rapport au poids de la matière de base de moulage réfractaire.

11. Procédé de fabrication de moules de coulée ou de noyaux comprenant :
• préparer le mélange de matières de moulage selon au moins l'une des revendications 1 à 10,
• charger le mélange des matières de moulage dans un moule, et
• faire durcir le mélange des matières de moulage sous retrait d'eau par durcissement à chaud sous chauffage.

12. Procédé selon la revendication 11, dans lequel le mélange des matières de moulage est chargé dans le moule au moyen d'une machine à tirer les noyaux à l'aide d'air comprimé et le moule est un outil de moulage et l'outil de moulage est traversé par un ou plusieurs gaz.

13. Procédé selon l'une des revendications 11 ou 12, dans lequel le mélange des matières de moulage est exposé au durcissement à une température d'au moins 100°C pendant au-dessous de 5 minutes et indépendamment de ceci, le mélange des matières de moulage est chauffé de façon particulièrement préférée par insufflation d'air d'une température de 100°C à 180°C dans l'outil de moulage.

14. Moule ou noyau susceptible d'être fabriqué selon au moins l'une des revendications 11 à 13.

15. Procédé pour la coulée de l'aluminium, comprenant
• préparer le mélange de matières de moulage selon au moins l'une des revendications 1 à 10,
• charger le mélange des matières de moulage dans un moule
• faire durcir le mélange des matières de moulage sous retrait d'eau par durcissement à chaud sous chauffage pour la fabrication d'un moule de coulée ou d'un noyau, et
• couler de l'aluminium ou un alliage d'aluminium dans le moule de coulée ou amener en contact de l'aluminium liquide ou un alliage d'aluminium liquide avec le noyau.

16. Procédé selon la revendication 15, dans lequel le durcissement pour la fabrication d'un moule de coulée ou d'un noyau est un durcissement à chaud, en particulier par exposition du mélange des matières de moulage à une température d'au moins 100°C pendant au-dessous de 5 minutes, et indépendamment de ceci de façon particulièrement préférée par insufflation d'air d'une température de 100°C à 180°C dans l'outil de moulage.

17. Utilisation de sulfate de baryum comme constituant de moules de coulée et de noyaux pour la coulée d'un métal, en particulier la coulée d'aluminium ou d'alliages d'aluminium, pour obtenir des pièces coulées ayant une surface de coulée améliorée, les moules de coulée et les noyaux ayant été durcis par du verre soluble en présence d'oxydes métalliques particulaires choisis dans le groupe de SiO₂ amorphe, des oxydes d'aluminium et des silicates d'aluminium et de leurs mélanges.
